# EUROPEAN PATENT APPLICATION

(11) **EP 4 234 597 A1**
(43) Date of publication of application: **30.08.2023**
(21) Application number: 23155784.4
(22) Date of filing: 09.02.2023
(51) Int. Cl.: C08F 220/06, C08F 220/18, C09D 5/00, C09D 133/02, C09D 133/08, C09D 17/00

(54) **HYDROPHOBIZED ACRYLIC COPOLYMER, METHOD FOR PRODUCING THEREOF, ITS USE AND A WATER-BASED PAINT COMPRISING THE COPOLYMER**

(30) Priority: 25.02.2022 PL 44047722
(71) Applicant: PPC Exol Spolka Akcyjna, 56-120 Brzeg Dolny (PL)
(72) Inventor: SLOWIKOWSKA, Monika, 54-129 Wroclaw (PL); TOMA, Lukasz, 46-083 Stare Siolkowice (PL)
(74) Representative: AOMB Polska Sp. z.o.o.

(57) **Abstract**

The invention relates to a hydrophobized acrylic copolymer, a method for producing a hydrophobized acrylic copolymer, its use and a water-based paint comprising said copolymer.

## Description

### The field of invention

The invention relates to a hydrophobized acrylic copolymer, a method for producing a hydrophobized acrylic copolymer, use thereof and a water-based paint comprising said copolymer.

### State of art

Water-based paints are under intense development. The main advantage of water-based paints over solvent-based ones is their ecological character, a much milder impact on the natural environment and low harmfulness to human health and life. In some applications, especially in the case of interior decorative paints, water-based products have almost completely replaced solvent-based products. Water-based paints are characterized by lower hydrophobicity resulting in deteriorated resistance properties, including water resistance, resulting from the need to use auxiliary agents, often of a hydrophilic nature.

Examples of such additives are titanium white dispersants and mineral fillers, such as polyacrylic acid salts, e.g. sodium and ammonium salts. Although they have excellent dispersing properties, they also have a negative impact on the water resistance of the coating due to their hydrophilic nature. In general, it is known in the field of the invention that the use of products of a hydrophilic nature significantly affects the deterioration of the properties of water-based products, especially in terms of water resistance of the paint coating.

To avoid this negative effect, the polymer can be hydrophobized by introducing hydrophobic groups into the chain of the polycarboxylic polymer, which significantly improve the water resistance of the coating. Additives with greater hydrophobicity can also be used to reduce water sensitivity. In the case of wetting and dispersing agents used in the production of white paints, these may be the so-called hydrophobized dispersants. These are usually copolymers of (meth)acrylic acid or maleic anhydride with appropriate (meth)acrylates, styrene and diisobutylene.

The interest in hydrophobization and hydrophobized acrylic polymers dates back to the 1970s. The effective dispersion of various pigments in paints while improving their resistance properties is the subject of ongoing research. A number of hydrophobized polymers and methods for their preparation have been described in the prior art.

Patent US3980602 refers to an acrylic polymer - a dispersant dedicated to water-based compositions for all types of pigments. According to the disclosure, the copolymer is made from three monomer components selected from the groups including: (i) styrene, alkyl methacrylate, and mixtures thereof, (ii) C2-C12 alkyl acrylate, and (iii) acrylic or methacrylic acid. As a result of using the free radical polymerization method, polymers with an average molecular weight of 500 to 30,000 Da and a glass transition temperature of -90 to 70°C were obtained. The method of obtaining the polymer is a conventional polymerization in which the monomers, solvent and initiator are introduced into the reaction vessel and heated to a selected temperature in the range of 60°C to 150°C for 1-5 hours. The catalyst is 0.1-4% by weight of the monomers and is typically 2,2'-azobis(2,4-dimethylvalerenitrile) (ABVN) or benzoyl peroxide. A chain transfer reaction control compound such as 2-mercaptoethanol or lauryl mercaptan was also used to control the molecular weight. A typical solvent used for polymerization was, for example, methanol, isopropanol, n-propanol or methyl ethyl ketone.

Patent US4243430 refers to the production and use of an acrylic polymer dedicated to difficult-to-disperse pigments, such as ZnO. Monomers such as methacrylic acid, n-butyl methacrylate, styrene and lauryl methacrylate were used for free radical polymerization. In the method developed by the inventors of this solution, anaerobic conditions, temperatures ranging from 30°C to 150°C are used, and the process is carried out in the presence of an initiator - tert-butyl peroxypivalate, ammonium persulfate, tert-butyl peracetate, tert-butyl hydroperoxide, cumene and redox catalysts. The catalyst is from 1 to 15% of the weight of the monomers. The polymer is neutralized during or after polymerization. To obtain low molecular weights of polymers, a chain transfer reaction control compound was used, such as tetrabromomethane, allyl chloride, thio-β-naphthol, thiophenol, butyl mercaptan, mercaptoethanol, isopropyl mercaptan or tert-butyl mercaptan.

Patent US4517098 relates to a dispersant for kaolin. The inventors of this solution describe the use of water-soluble acrylic copolymers with an average molecular weight in the range of 2000 to 5000 Da. The low molecular weight copolymers consisted of 85 to 97% acrylic acid and 3% to 15% of a hydrophobic monomer such as C2-C8 acrylate or C1-C8 methacrylate or an aromatic vinyl compound. More complex structures could also be dispersants.

Patent US5554682 relates to obtaining polymers with an average molecular weight of 18,000 to 24,000 Da by means of free radical polymerization, which consist of styrene, alkyl methacrylate, alkyl acrylate and a monomer with a hydroxyl group. This patent gives examples of the polymerization conditions used and how they were carried out.

Patent US6359058 describes a dispersant which is a copolymer of 75% to 85% by mole of methacrylic acid and 15% to 25% of n-butyl acrylate with a weight of 20,000 to 60,000 Da, wherein polymer is in a partially or fully neutralized form. The dispersant creates stable dispersions in emulsion paints and improves the water resistance of paint and coatings.

The above patents relate to various methods of obtaining acrylic polymers and their use to produce dispersions with various pigments. These solutions provide dispersants that can improve the water resistance of paints and coatings to which they are added. However, there is still a need in the art to further improve the water resistance and scrub resistance of paints and coatings. Surprisingly, the dispersant composition obtained in accordance with the present invention has been found to be able to obtain a coating with a significant increase in both of these parameters compared to the effects obtained using known dispersants in the art, and at the same time is a suitable dispersant for titanium white and/or mineral fillers.

### The object of the invention

In a first aspect, the object of the invention is a hydrophobized acrylic copolymer consisting of:
from 30 to 70% by weight of a monomer selected from the group of unsaturated carboxylic acids having a vinyl group, and
from 30 to 70% by weight of a monomer selected from the group of 2-propenoic acid esters with a C2-C8 alkyl chain length,
wherein the molecular weight of the copolymer is from 4,000 to 20,000 Da, preferably from 7,000 to 17,000 Da, and the glass transition temperature is from 25 to 35°C

In a preferred embodiment, the hydrophobized acrylic copolymer comprises acrylic acid as a monomer selected from the group of unsaturated carboxylic acids having a vinyl group and n-butyl acrylate as a monomer selected from the group of 2-propenoic acid esters.

In a second aspect, the invention also relates to a method for producing a hydrophobized acrylic copolymer which comprises the following steps:
(a) preparation of seeds consisting of a monomer selected from the group of esters of 2-propenoic acid with a C2-C8 alkyl chain length and a monomer selected from the group of unsaturated carboxylic acids having a vinyl group,
(b) dosing to seeds an amount of a monomer from the group of esters of 2-propenoic acid with a C2-C8 alkyl chain length and a monomer from the group of unsaturated carboxylic acids having a vinyl group, a polymerization initiator selected from the group of azoesters, a solvent selected from the group of ketones, a chain transfer agent selected from the group of organosulphur compounds and other optional ingredients,
(c) conducting radical polymerization by heating the reaction mixture at a temperature of 30-90°C to obtain a hydrophobized copolymer,
(d) cooling the reaction mixture,
(e) neutralizing the reaction mixture with an aqueous solution of alkali metal hydroxides or an aqueous solution of ammonia, and
(f) evaporating the solvent to obtain a concentrated hydrophobized copolymer,
wherein the monomer from the group of 2-propenoic acid esters with a C2-C8 alkyl chain length is used in an amount of 30-70% by weight based on the total weight of the monomers, and the monomer from the group of unsaturated carboxylic acids having a vinyl group is used in an amount of 30-70 % by weight based on the total weight of the monomers.

In a preferred variant of the method according to the invention, 1-15% by weight of the total amount of monomer from the group of unsaturated carboxylic acids having a vinyl group and 5-20% by weight of the total amount of monomer from the group of 2-propenoic acid esters with a C2-C8 alkyl chain length are used to prepare the seeds. More preferably, a 2-propenoic acid ester monomer having a C4-C6 alkyl chain length is used, such as n-butyl acrylate. Preferably, 2-propenoic acid or 2-methyl-2-propenoic acid, in particular acrylic acid, is used as the monomer selected from the group of unsaturated carboxylic acids having a vinyl group.

In another preferred variant of the method according to the invention, the polymerization initiator is selected from: 2,2'-azobisisobutyronitrile, 2,2'-azobis(2,4-dimethylvaleronitrile), azobis(4-cyanovaleric acid) and 2,2'-azobis(2-methylpropionitrile). Preferably, the polymerization initiator is used in an amount of maximum 2.5% by weight based on the total weight of the monomers.

In yet another preferred variant of the method of the invention, the chain transfer agent is selected from n-dodecyl mercaptan, mercaptopropionic acid, 2-naphthalenethiol, thiophenol, butylmercaptan, ethanethiol or tert-butylmercaptan. Preferably, the chain transfer agent is used in an amount of 1-5% by weight based on the total weight of the monomers.

Preferably, in step (b) of the method according to the invention, the monomer mixture together with the chain transfer compound is dosed in parallel with the initiator mixture in the solvent.

Preferably, the reaction mixture is cooled in step d) of the method to room temperature.

Preferably, in step (e) of the method, the reaction mixture is neutralized to a pH in the range of 6-9.

In a third aspect, the invention also relates to the use of the copolymer according to the invention as a dispersant for inorganic pigments and/or mineral fillers for water-based paints and coating compositions. Preferably, the copolymer is used in the form of an aqueous mixture with a copolymer concentration of 24 to 26% by weight. Preferably the pigment is titanium white.

In a fourth aspect, the invention also provides a water-based paint comprising such a copolymer.

### Advantages of the invention

The method of the present invention allows to obtain a hydrophobized acrylic copolymer with a high content of n-butyl acrylate, which finds use as a dispersant in water-based paints and coatings. The addition of a hydrophobized dispersant helps to increase the water resistance and scrub resistance of the coatings obtained with use thereof. As a result, the high content of hydrophobic n-butyl acrylate groups in the copolymer structure contributes to a significant improvement of these parameters, while maintaining the safety and ecological nature of water-based coating compositions and excellent dispersion properties with respect to titanium white and mineral fillers

In addition, the research carried out showed that the addition of the copolymer according to the invention allows to improve the properties of anti-corrosion paints.

Moreover, the resulting acrylic copolymer has a molecular weight in the range of 4,000 to 20,000 Da, preferably 7,000 to 17,000 Da. Such a molecular weight has a positive effect on the application properties of the product, in particular on its dispersing ability with respect to titanium white and mineral fillers, as well as improving the water resistance of the paint coating.

### Brief description of the figures

The subject of the invention in an embodiment is illustrated in the drawing, where:
Fig. 1 shows the change in paint viscosity over time during the aging process for five tested compositions of white interior paints (Example 4).
Figure 2 shows paint coating thickness loss after 200 scrubbing cycles for the five tested interior white paint compositions (Example 4).
Figure 3 shows the change in paint viscosity over time during the aging process for the five tested anticorrosive paint compositions (Example 5).
Fig. 4 shows the appearance of the coatings after 6 hours of exposure to distilled water and 5% NaCl solution for the five tested anticorrosive paint compositions (Example 5).

### Detailed description of the invention

The subject of the invention in a first aspect is a hydrophobized acrylic copolymer consisting of a monomer selected from the group of unsaturated carboxylic acids having a vinyl group and a monomer selected from the group of 2-propenoic acid esters.

The first monomer, selected from the group of unsaturated carboxylic acids having a vinyl group, is preferably 2-propenoic acid or 2-methyl-2-propenoic acid. In the most preferred embodiment of the invention, said monomer is acrylic acid (2-propenoic acid).

The content of this monomer in the copolymer ranges from about 30 to about 70% by weight, preferably from about 40 to about 55% by weight, and more preferably from about 47% to about 53% by weight, based on the total weight of the monomers.

The second monomer is selected from the group of esters of 2-propenoic acid with a C2-C8 alkyl chain length, preferably comprising from 4 to 6 carbon atoms in the alkyl chain. In the most preferred embodiment of the invention, said monomer is n-butyl acrylate.

The content of this monomer in the copolymer ranges from about 30 to about 70% by weight, preferably from about 45 to about 60% by weight, and more preferably from about 47% to about 53% by weight, based on the total weight of the monomers. This component is the basic component of the copolymer

The molecular weight of the copolymer of the invention ranges from about 4,000 to about 20,000 Da, preferably from about 7,000 to about 17,000 Da, and more preferably from about 6,000 to about 10,000 Da. The molecular weight was determined by GPC gel permeation chromatography.

The indicated range of copolymer molecular weights allows for obtaining technical effects related to the dispersing properties of the copolymer and its beneficial effect on improving the water resistance of the paint coating.

The glass transition temperature of the copolymer of the invention is in the range of about 25 to about 35°C.

In a second aspect, the present invention relates to a method for producing a hydrophobized acrylic copolymer consisting of a monomer selected from the group of unsaturated carboxylic acids having a vinyl group and a monomer selected from the group of 2-propenoic acid esters. The method according to the invention uses a radical polymerization reaction.

The first component used in the method for producing the copolymer is a monomer selected from the group of unsaturated carboxylic acids having a vinyl group, preferably selected from 2-propenoic acid or 2-methyl-2-propenoic acid, such as acrylic acid (2-propenoic acid), used in the method according to the invention in an amount of from about 30 to about 70% by weight, preferably from about 40 to about 55% by weight, and more preferably from about 47% to about 53% by weight based on the total weight of the monomers. This component is the basic component of the copolymer.

The second copolymer component used in the copolymer production method is a monomer selected from the group of 2-propenoic acid esters with a C2-C8 alkyl chain length, preferably a C4-C6 chain length, such as n-butyl acrylate used in the method according to the invention in an amount of about 30 to about 70% by weight, preferably from about 45 to about 60% by weight, and more preferably from about 47% to about 53% by weight based on the total weight of the monomers. This component acts as a hydrophobized monomer component.

In addition, the method according to the invention uses:
- a solvent selected from the group of ketones, preferably acetone, methyl ethyl ketone (MEK) or methyl isobutyl ketone (MIBK), wherein such solvent being used in an amount of 75-120% by weight based on the total weight of monomers, preferably in an amount of 90 -110% by weight.
- a polymerization initiator selected from the group of azoesters, preferably 2,2'-azobisisobutyronitrile, 2,2'-azobis(2,4-dimethylvaleronitrile), azobis(4-cyanovaleric acid) or 2,2'-azobis(2-methylpropionitrile), preferably 2,2'-azobis(isobutyronitrile) (AIBN) in an amount of up to about 2.5% by weight based on the total weight of the monomers, preferably in an amount of between about 0.3% and about 0.5% by weight. Preferably, the reaction initiator is used as a mixture in the above-mentioned solvent, using for example 20-30% by weight of the total solvent weight.
- a chain transfer agent selected from the group of organosulfur compounds, preferably n-dodecyl mercaptan, mercaptopropionic acid, 2-naphthalenethiol, thiophenol, butylmercaptan, ethanethiol or tert-butylmercaptan. The chain transfer agent is preferably used in an amount of from about 1 to about 5% by weight based on the total weight of the monomers, preferably in an amount of 2-3% by weight, and
- optionally other auxiliary ingredients such as preservatives and defoamers. These optional ingredients are added within ranges known in the art depending on the selection of the other ingredients in the mixture and the selected process parameters. For example, with more vigorous mixing, it may be necessary to add more defoamers than with laminar mixing.

In the method according to the invention, in the first stage, the polymerization of the components is carried out using seeds.

The seeds is prepared by mixing in a reaction vessel a monomer from the group of unsaturated carboxylic acids having a vinyl group in an amount of about 1 to about 15% by weight based on the total weight of this monomer, and a monomer from the group of 2-propenoic acid esters with an C2-C8 alkyl chain length in an amount of from about 5 to about 20% by weight of the total amount.

In a preferred variant, the seeds is prepared in the presence of 50-100% by weight of the total amount of solvent used in the synthesis, such as for example 75-80% by weight, and also in the presence of 1-20% by weight of the total amount of chain transfer compound used in the synthesis, such as for example 5-15% by weight. Optionally, the solvent is preheated to a temperature in the range of 50-90°C, such as, for example, 70°C before the remaining seeds ingredients are added thereto.

The remaining ingredients are dosed to the seeds prepared, together with the remaining part of both monomers. The dosing takes not less than 60 minutes, preferably 240 minutes. Optionally, the seeds may be heated to a temperature in the range of 50-90°C, such as 75°C, before incorporating the other ingredients into it.

In the next step, the resulting mixture is heated at a temperature in the range of about 30°C to about 90°C, preferably in the range of about 60°C to about 80°C, and even more preferably in the range of about 75°C to about 80°C. The annealing temperature is maintained until the end of the polymerization process. The annealing step lasts not less than 60 minutes, preferably 180 minutes.

The resulting reaction mixture is then cooled to a temperature below 40°C, such as, for example, room temperature, and neutralized. Preferably, the neutralization process is carried out using an aqueous solution of alkali metal hydroxide or an aqueous solution of ammonia, preferably an aqueous solution of sodium hydroxide, for example with a concentration of 30%, to a pH value in the range of 6-9, preferably in the range of 7-8.

In the next step, the solvent is evaporated, preferably by fractional distillation, to obtain a concentrated dispersant in which the solvent content does not exceed 0.1% by weight.

In a preferred embodiment, the product obtained by the described reaction is then diluted with demineralized water to a concentration of about 24 to about 26% by weight. This concentration provides a stable form of the hydrophobized dispersant.

The above-described reaction may be carried out using any suitable process equipment that allows the process temperature to be kept constant and reactants to be added during the process. For example, the reaction may be carried out in a glass thermostatic reactor equipped with suitable connections. Preferably, such a reactor is also equipped with a reflux condenser and heating is effected by means of a heating jacket.

The ratio of monomers used above is appropriate to obtain the preferred end product - a hydrophilic copolymer with partially hydrophobic properties. Thanks to the appropriate selection of reaction parameters (i.e. solvent, initiator, chain transfer agent (molecular weight regulator), optimal process temperature and reaction time, as well as other technological parameters such as the method and rate of dosing individual components), products with high, almost 100% conversion was obtained and with desirable properties from the application point of view.

The average molecular weight of the resulting product ranges from 4,000 to 20,000 Da, preferably from 7,000 to 17,000 Da, even more preferably from 6,000 to 10,000 Da.

The polydispersity of the obtained product was in the range of 2 - 4, and the content of unreacted monomers did not exceed 0.1% by weight. The physical and chemical properties of the product were also determined, i.e. its viscosity, which was in the range of 50 - 200 mPa·s and the dry weight of the copolymer, which was 24 - 26%.

In a third aspect, the present invention also relates to the use of the obtained product as a dispersant for inorganic pigments for water-based paints, for example decorative and industrial paints, and coating compositions.

Such addition of dispersant should be in the range of 0.5 - 2% % by weight, preferably about 1% by weight of the paint or coating composition. The acrylic copolymer obtained according to the invention is used in particular as an effective dispersant of titanium white and/or mineral fillers for white paints for interior and anti-corrosion paints.

In a preferred embodiment, the copolymer of the invention is added to the paint or coating composition as an aqueous mixture having a copolymer concentration of from about 24 to about 26% by weight.

In a fourth aspect, the invention provides a water-based paint comprising a copolymer of the invention. All features of the invention indicated in relation to the previous three aspects of the present invention are also applicable in relation to the fourth aspect.

According to the invention, the word "about" used above and below is to be understood as a deviation of +/- 5% from the given value reflecting inaccuracies that may occur, for example, when measuring the copolymer components or determining its parameters.

### Examples

### Example 1 (obtaining a hydrophobized polymer)

The reaction was carried out in a 500 ml glass reactor with a thermostatic heating jacket, equipped with a glass lid with five inlets, a reflux condenser, a mechanical stirrer and a thermometer. The system was also equipped with two syringe infusion pumps for the administration of the initiator (AIBN) and the chain transfer agent (3-mercaptopropionic acid), respectively.

95 g of MEK was placed in the reactor and heated to 70°C. Then 3.75 g of acrylic acid, 8.75 g of n-butyl acrylate and 0.25 g of 3-mercaptopropionic acid were added. The mixture was heated to 75°C. Then, at the set temperature, the simultaneous dropwise addition of 2.25 g of AIBN in 25 g of MEK and a solution containing 58.75 g of acrylic acid, 53.75 g of n-butyl acrylate and 2.5 g of 3-mercaptopropionic acid was started for 240 minutes. After the addition was complete, the mixture was heated for an additional 180 minutes. After this time, the reactor was cooled to a temperature of about 30°C and 98.3 g of a 30% NaOH solution and 78.2 g of demineralized water were added. The solvent was evaporated and then diluted to a dry weight of 25%. A polymer with a molecular weight of 8,000 Da was obtained.

### Example 2 (obtaining a hydrophobized polymer)

The reaction was carried out in a 500 ml glass reactor with a thermostatic heating jacket, equipped with a glass lid with five inlets, a reflux condenser, a mechanical stirrer and a thermometer. The system was also equipped with two syringe infusion pumps for the administration of the initiator (AIBN) and the chain transfer agent (3-mercaptopropionic acid), respectively.

95 g of MEK was placed in the reactor and heated to 70°C. Then 3.75 g of acrylic acid, 8.75 g of n-butyl acrylate and 0.25 g of 3-mercaptopropionic acid were added. The mixture was heated to 75°C. Then, at the set temperature, the simultaneous dropwise addition of 2.25 g of AIBN in 25 g of MEK and a solution containing 46.25 g of acrylic acid, 66.25 g of n-butyl acrylate and 2.5 g of 3-mercaptopropionic acid was started for 240 minutes. After the dropping was complete, the mixture was heated for an additional 180 minutes. After this time, the reactor was cooled to a temperature of about 30°C and 98.3 g of a 30% NaOH solution and 78.2 g of demineralized water were added. The solvent was evaporated and then diluted to a dry weight of 25%. A polymer with a molecular weight of 7,700 Da was obtained.

### Example 3 (obtaining a hydrophobized polymer)

The reaction was carried out in a 500 ml glass reactor with a thermostatic heating jacket, equipped with a glass lid with five inlets, a reflux condenser, a mechanical stirrer and a thermometer. The system was also equipped with two syringe infusion pumps for the administration of the initiator (AIBN) and the chain transfer agent (3-mercaptopropionic acid), respectively.

95 g of MEK was placed in the reactor and heated to 70°C. Then 3.75 g of acrylic acid, 8.75 g of n-butyl acrylate and 0.25 g of 3-mercaptopropionic acid were added. The mixture was heated to 75°C. Then, at the set temperature, the simultaneous dropwise addition of 2.25 g of AIBN in 25 g of MEK and a solution containing 71.25 g of acrylic acid, 41.25 g of n-butyl acrylate and 2.5 g of 3-mercaptopropionic acid was started for 240 minutes. After the dropping was complete, the mixture was heated for an additional 180 minutes. After this time, the reactor was cooled to a temperature of about 30°C and 98.3 g of a 30% NaOH solution and 78.2 g of demineralized water were added. The solvent was evaporated and then diluted to a dry weight of 25%. A polymer with a molecular weight of 8,600 Da was obtained.

### Example 4 (use of hydrophobized copolymer from example 1 - white interior paint)

In this example, the properties of a hydrophobized copolymer when used as a dispersant in a white interior paint composition were determined. This paint is characterized by a high pigment volume concentration (PVC) - at the level of 83%.

The main purpose of the experiment was to check the effect of the tested dispersant according to the invention on the stability and resistance to wet scrubbing of five different paints with the compositions given in table 1. The properties of the product (paints 2 and 3) were compared with the paint with the addition of: hydrophilic dispersant, i.e. poly(acrylic acid) ammonium salt (paint 1) and a hydrophobic dispersant, i.e. a commercially available dispersant (reference product I, paints 4 and 5). The concentration of the dispersant used was in the range of 0.4 - 1.4%, depending on the specific agent and its effectiveness.

**Table 1: Composition of five white interior paints used for the tests**

| **No.** | **Paint composition [% w/w]** | **1** | **2** | **3** | **4** | **5** |
|---|---|---|---|---|---|---|
| 1 | Water | 33.3 | 32.9 | 32.7 | 32.7 | 32.3 |
| 2 | Hydroxyethylcellulose (Natrosol 250HBR) | 0.45 | 0.45 | 0.45 | 0.45 | 0.45 |
| 3 | Polyacrylic acid ammonium salt, 40% | 0.4 | | | | |
| | Hydrophobized copolymer according to the invention, 25% | | 0.8 | 1.0 | | |
| | Reference product I, 25% | | | | 1.0 | 1.4 |
| 4 | Titanium white (Tytanpol R001) | 7.0 | 7.0 | 7.0 | 7.0 | 7.0 |
| 5 | CaCO₃, 2µm (Calplex 2) | 31.0 | 31.0 | 31.0 | 31.0 | 31.0 |
| 6 | CaCO₃, 5µm (Calplex 5) | 18.0 | 18.0 | 18.0 | 18.0 | 18.0 |
| 7 | Styrene-acrylic dispersion | 9.0 | 9.0 | 9.0 | 9.0 | 9.0 |
| 8 | Coalescent (Texanol) | 0.35 | 0.35 | 0.35 | 0.35 | 0.35 |
| 9 | Defoaming agent | 0.3 | 0.3 | 0.3 | 0.3 | 0.3 |
| 10 | Biocide | 0.2 | 0.2 | 0.2 | 0.2 | 0.2 |

The procedure for preparing a paint sample is as follows:
Paint samples were prepared using a Disperlux Yellow laboratory dissolver. 2/3 of the defoaming agent was added to the solution of components 1-3, then the whole was stirred and components 4-6 were added. After complete wetting of the pigment and fillers, the stirrer speed was increased and it was dispersed for 30 minutes. After this time, components 7-10 (including 1/3 of the remaining amount of defoaming agent) were added and mixed for a further 15 min.

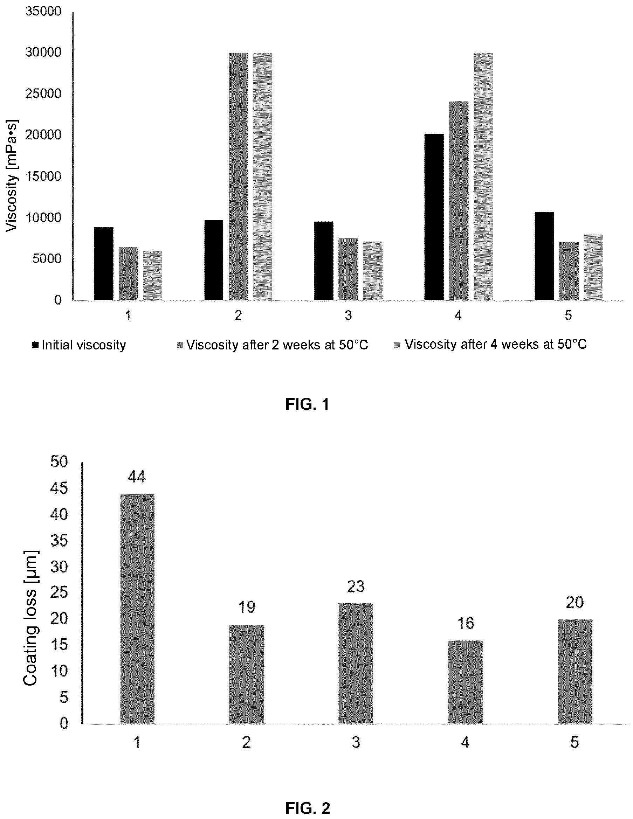

**Paint stability over time:** The stability of each paint sample was evaluated based on changes in viscosity of samples after a specified aging time, under controlled conditions. The initial viscosity of the sample was measured approximately 24 hours after paint preparation using a Brookfield viscometer, spindle no. 64, routes 20 rpm. The paint sample was then placed in a thermostatic cabinet set at 50°C for aging. After an aging period of 2 and 4 weeks, respectively, after mixing the sample, its viscosity was measured as described above. The results for the five paints are shown in Figure 1

**Wet scrubbing resistance test of paint:** Wet scrubbing resistance was determined according to the PN-EN ISO 11998 standard. Using a slot applicator (slot height 240 µm) moved by an automatic applicator (speed 12.5 mm/s) a paint sample was applied to a black PVC panel. The coated panels were conditioned for 28 days at ambient temperature. After this time, the coating thickness loss after 200 scrubbing cycles was determined. The results are shown in Figure 2.

**Results:** The performed tests show that the hydrophobic dispersant according to the invention is not as effective in terms of dispersing ability as the hydrophilic agent (poly(acrylic acid) ammonium salt), but it is much more effective than its hydrophobic commercial equivalent (Reference Product I). The wet scrubbing resistance test showed a significant improvement of this parameter with the use of the agent according to the invention in relation to the hydrophilic dispersant. The results obtained for the copolymer according to the invention are comparable to those obtained for a commercial hydrophobic dispersant.

### Example 5 (use of hydrophobized copolymer from example 1 - anti-corrosion paint)

In this example, the properties of a hydrophobized copolymer when used as a dispersant in an anticorrosive paint composition were determined. Five white primer-type anti-corrosion paints - dedicated to be applied directly to steel surfaces - were prepared for testing. Their compositions are shown in Table 2. As in example 2, paint 1 comprised a hydrophilic dispersant - polyacrylic acid ammonium salt, and paint 2 comprised another hydrophilic dispersant - polyacrylic acid sodium salt. In paint 3, the dispersant additive was the product obtained by the method of the invention, and in paints 4 and 5, two commercially available hydrophobic dispersants were added - Reference product I and Reference product II.

**Table 2: Composition of five water-based anti-corrosion paints used for the tests.**

| **No.** | **Paint composition [% w/w]** | **1** | **2** | **3** | **4** | **5** |
|---|---|---|---|---|---|---|
| 1 | Water | 15.37 | 15.37 | 15 | 14.5 | 15 |
| 2 | Poly(acrylic acid) ammonium salt, 40% | 0.63 | | | | |
| | Poly(acrylic acid) ammonium salt, 40% | | 0.63 | | | |
| | The hydrophobized copolymer, according to the invention, 25% | | | 1.0 | | |
| | Reference product I, 25% | | | | 1.5* | |
| | Reference product II, 25% | | | | | 1.0 |
| 3 | Titanium white (Tytanpol R001) | 10.0 | 10.0 | 10.0 | 10.0 | 10.0 |
| 4 | CaCO₃, 2µm (Calplex 2) | 6.2 | 6.2 | 6.2 | 6.2 | 6.2 |
| 5 | Talc (Talc M15) | 6.2 | 6.2 | 6.2 | 6.2 | 6.2 |
| 6 | Hydrophilic fumed silica (Aerosil 200) | 0.2 | 0.2 | 0.2 | 0.2 | 0.2 |
| 7 | Acrylic dispersion | 55.0 | 55.0 | 55.0 | 55.0 | 55.0 |
| 8 | Defoaming agent | 0.5 | 0.5 | 0.5 | 0.5 | 0.5 |
| 9 | Silicone wetting agent | 0.2 | 0.2 | 0.2 | 0.2 | 0.2 |
| 10 | Anti-flash rust inhibitor | 0.5 | 0.5 | 0.5 | 0.5 | 0.5 |
| 11 | HEUR modifier | 1.0 | 1.0 | 1.0 | 1.0 | 1.0 |
| 12 | Butyldiglikol | 2.0 | 2.0 | 2.0 | 2.0 | 2.0 |
| 13 | Coalescent (Texanol) | 2.0 | 2.0 | 2.0 | 2.0 | 2.0 |
| 14 | Biocide | 0.2 | 0.2 | 0.2 | 0.2 | 0.2 |

| | | | | | | |
|---|---|---|---|---|---|---|
| * due to the very high viscosity of the component, a lower concentration was unobtainable. | | | | | | |

The paints were prepared in a manner analogous to that described in Example 4.

2/3 of the defoaming agent was added to the solution of components 1-2, then the whole was stirred and components 3-6 were added. After complete wetting of the pigment and fillers, the stirrer speed was increased and it was dispersed for 30 minutes. After this time, components 7-14 (including 1/3 of the remaining amount of defoaming agent) were added and mixed for a further 30 min.

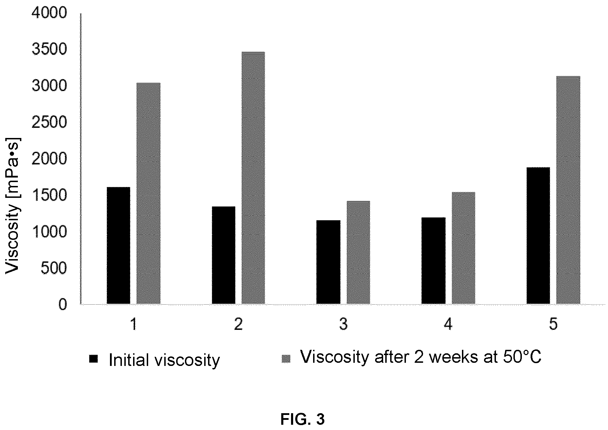

**Testing the stability of the paint over time_**The stability of the obtained paint samples was determined as in example 4. The parameter was measured 24 hours after preparation and after two weeks of aging at 50°C. The results are shown in Fig. 3

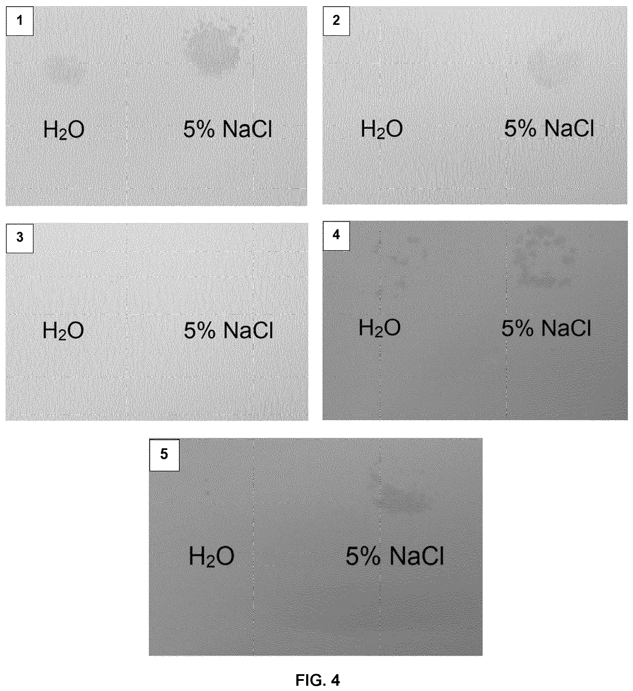

**Anti-corrosion properties test:** The anti-corrosion properties were tested using the "water drop" method. Two layers of each anti-corrosion paint were applied to the degreased and cleaned of all dirt steel plates, and then left to dry for a week. Two swabs were placed on the paint coating. 5-6 drops of distilled water were applied to one of them, and 5-6 drops of 5% aqueous NaCl solution were applied to the other. The samples were left for 6 hours to allow these agents to interact with them. After drying of the applied liquids, the photos shown in Fig. 4 were taken

**Results:** In the case of using the hydrophobized copolymer according to the invention, a lower increase in viscosity is observed after 2 weeks of aging at 50°C than in analogous samples containing hydrophilic dispersants, i.e. poly(acrylic acid) ammonium salt and poly(acrylic acid) sodium salt. The viscosity profile is very similar to the sample containing hydrophobic Reference product I, however, as already indicated, use of greater amount of Reference product I was needed. The other hydrophobic commercial dispersant performs similarly to the hydrophilic ones - a large increase in paint viscosity is observed. The examination of the anti-corrosive properties showed that the product according to the invention has significantly better properties than agents with a hydrophilic structure. The greatest difference is observed between the hydrophobized copolymer of the invention and the poly(acrylic acid) sodium salt. It is worth noting that when using the dispersant according to the invention, no visible corrosion centers appeared, which occurred even when using commercial hydrophobic agents

## Claims

1. A hydrophobized acrylic copolymer **characterized in that** it consists of
from 30 to 70% by weight of a monomer selected from the group of unsaturated carboxylic acids having a vinyl group, and
from 30 to 70% by weight of a monomer selected from the group of 2-propenoic acid esters with a C2-C8 alkyl chain length,
wherein the molecular weight of the copolymer is from 4,000 to 20,000 Da and the glass transition temperature is from 25 to 35°C.

2. The hydrophobized acrylic copolymer according to claim 1, **characterized in that** the monomer selected from the group of unsaturated carboxylic acids having a vinyl group comprises acrylic acid and the monomer selected from the group of 2-propenoic acid esters comprises n-butyl acrylate.

3. A method for producing a hydrophobized acrylic copolymer, **characterized in that** it comprises the following steps:
(a) preparation of a seeds consisting of a monomer selected from the group of esters of 2-propenoic acid with a C2-C8 alkyl chain length and a monomer selected from the group of unsaturated carboxylic acids having a vinyl group,
(b) dosing to the seeds an amount of a monomer from the group of esters of 2-propenoic acid with a C2-C8 alkyl chain length and a monomer from the group of unsaturated carboxylic acids having a vinyl group, a polymerization initiator selected from the group of azoesters, a solvent selected from the group of ketones, a chain transfer agent selected from the group of organosulphur compounds and other optional ingredients,
(c) conducting radical polymerization by heating the reaction mixture at a temperature of 30-90°C to obtain a hydrophobized copolymer,
(d) cooling the reaction mixture,
(e) neutralizing the reaction mixture with an aqueous solution of alkali metal hydroxides or an aqueous solution of ammonia, and
(f) evaporating the solvent to obtain a concentrated hydrophobized copolymer,
wherein the monomer from the group of 2-propenoic acid esters with a C2-C8 alkyl chain length is used in an amount of 30-70% by weight based on the total weight of the monomers, and the monomer from the group of unsaturated carboxylic acids having a vinyl group is used in an amount of 30-70 % by weight based on the total weight of the monomers.

4. The method according to claim 3, **characterized in that**, 1-15% by weight of the total amount of monomer from the group of unsaturated carboxylic acids having a vinyl group and 5-20% by weight of the total amount of monomer from the group of 2-propenoic acid esters with a C2-C8 alkyl chain length are used to prepare the seeds.

5. The method according to claim 3 or 4, **characterized in that** the monomer from the group of 2-propenoic acid esters having a C4-C6 alkyl chain length, such as n-butyl acrylate, is used.

6. The method according to one of claims 3-5, **characterized in that** the monomer selected from the group of unsaturated carboxylic acids having a vinyl group is 2-propenoic acid or 2-methyl-2-propenoic acid, preferably acrylic acid.

7. The method according to one of claims 3-6, **characterized in that** the polymerization initiator is selected from: 2,2'-azobisisobutyronitrile, 2,2'-azobis(2,4-dimethylvalerenitrile), azobis(4-cyanovaleric acid) and 2,2'-azobis(2-methylpropionitrile).

8. The method according to one of claims 3 to 7, **characterized in that** the polymerization initiator is used in an amount of a maximum of 2.5% by weight based on the total weight of the monomers.

9. The method according to one of claims 3-8, **characterized in that** the chain transfer agent is selected from n-dodecyl mercaptan, mercaptopropionic acid, 2-naphthalenethiol, thiophenol, butylmercaptan, ethanethiol or tert-butylmercaptan.

10. The method according to one of claims 3-9, **characterized in that** the chain transfer agent is used in an amount of 1-5% by weight based on the total weight of the monomers.

11. The method according to one of claims 3 to 10, **characterized in that** in step (b) the monomer mixture together with the chain transfer compound is dosed in parallel with the initiator mixture in the solvent.

12. The method according to one of the claims 3-11, **characterized in that** the reaction mixture is cooled in step d) to room temperature.

13. The method according to any one of claims 3-12, **characterized in that** in step (e) the reaction mixture is neutralized to a pH in the range of 6-9.

14. Use of a copolymer according to claim 1 or 2 as a dispersant for inorganic pigments and/or mineral fillers for water-based paints and coating compositions.

15. The use according to claim 14, wherein the copolymer is used in the form of an aqueous mixture with a copolymer concentration of 24 to 26% by weight

16. The use according to claim 14 or 15, wherein the pigment is titanium white.

17. A water-based paint comprising a copolymer according to claim 1 or 2.
